# EUROPEAN PATENT SPECIFICATION

(11) **EP 4 138 005 B1**
(45) Date of publication and mention of the grant of the patent: **16.10.2024**
(21) Application number: 22188054.5
(22) Date of filing: 01.08.2022
(51) Int. Cl.: G06N 20/00, G05B 13/02, G06N 3/006, G06N 7/01

(54) **LEARNING DEVICE, LEARNING METHOD, LEARNING PROGRAM, AND CONTROL**
LERNVORRICHTUNG, LERNVERFAHREN, LERNPROGRAMM UND STEUERUNG
DISPOSITIF D'APPRENTISSAGE, PROCÉDÉ D'APPRENTISSAGE, PROGRAMME D'APPRENTISSAGE ET COMMANDE

(30) Priority: 05.08.2021 JP 2021129016
(43) Date of publication of application: 22.02.2023
(73) Proprietor: Yokogawa Electric Corporation, Musashino-shi, Tokyo 180-8750 (JP)
(72) Inventor: Zhuo, Liu, Tokyo, 180-8750 (JP); Kanokogi, Hiroaki, Tokyo, 180-8750 (JP)
(74) Representative: Hoffmann Eitle

(56) References cited:
- US-A1- 2008 306 890
- US-A1- 2017 090 428
- US-A1- 2021 055 712

## Description

### BACKGROUND

### 1. TECHNICAL FIELD

The present invention relates to a learning device, a learning method, a learning program, and a control device.

### 2. RELATED ART

JP 2018-202564 A describes that "a cycle in which a current state of an environment in which a learning target exists is observed, a predetermined action is executed in the current state, and some reward is given to the action is repeated in a trial-and-error manner, and a measure that maximizes a total sum of rewards is learned as an optimal solution". Further, US 2008/0306890 A1 relates to a plant control system using machine learning to achieve said control.

### SUMMARY

The present invention is defined by the subject-mater of claim 1. The dependent claims describe further preferred embodiments, and this description explains how the present invention may be carried out.

### BRIEF DESCRIPTION OF THE DRAWINGS

Fig. 1 illustrates an example of a block diagram of a learning device 100 according to the present embodiment together with equipment 10 provided with a control target 20.
Fig. 2 illustrates an example of a process variable PV and a manipulated variable MV which may be acquired as state data by the learning device 100 according to the present embodiment.
Fig. 3 illustrates an example of a distribution of a manipulated variable change amount ΔMV which may be acquired as action data by the learning device 100 according to the present embodiment.
Fig. 4 illustrates an example of a flow of preliminary learning by the learning device 100 according to the present embodiment.
Fig. 5 illustrates an example of a table of an initialized machine learning model initialized by preliminary learning by the learning device 100 according to the present embodiment.
Fig. 6 illustrates an example of a block diagram of the learning device 100 according to a modification of the present embodiment together with the equipment 10 provided with the control target 20.
Fig. 7 illustrates an example of a calculation result when the learning device 100 according to the modification of the present embodiment outputs an action corresponding to a state by the machine learning model.
Fig. 8 illustrates an example of a table of a machine learning model obtained when the learning device 100 according to the modification of the present embodiment performs updating by reinforcement learning.
Fig. 9 illustrates an example of a block diagram of a control device 900 according to the present embodiment together with the equipment 10 provided with the control target 20.
Fig. 10 illustrates an example of a computer 9900 in which a plurality of aspects of the present invention may be embodied in whole or in part.

### DESCRIPTION OF EXEMPLARY EMBODIMENTS

Hereinafter, (some) embodiment(s) of the present invention will be described. The embodiment(s) do(es) not limit the invention according to the claims,
and all the combinations of the features described in the embodiment(s) are not necessarily essential to means provided by aspects of the invention.

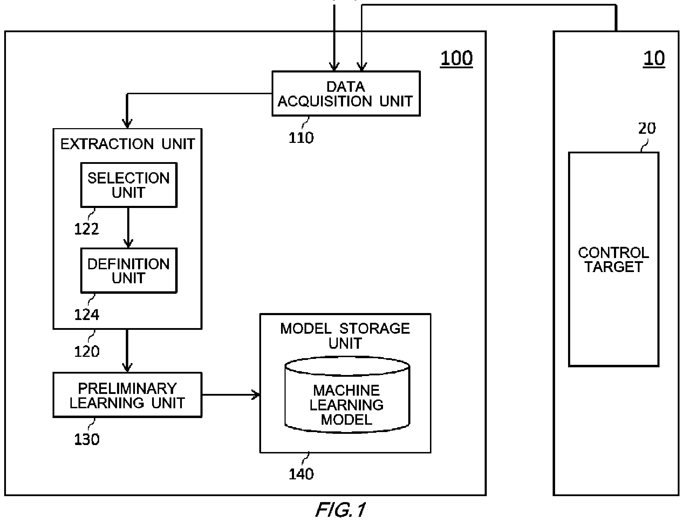

Fig. 1 illustrates an example of a block diagram of a learning device 100 according to the present embodiment together with equipment 10 provided with a control target 20. The learning device 100 according to the present embodiment initializes a machine learning model to be used for the control of the control target 20 by performing preliminary learning before the start of the reinforcement learning of the machine learning model.

The equipment 10 is an installation, a device, or the like provided with the control target 20. For example, the equipment 10 may be a plant or may be a composite device obtained by combining a plurality of instruments. Examples of the plant include an industrial plant such as a chemical plant or a bio plant, a plant for managing and controlling a wellhead such as a gas field and an oil field and surroundings thereof, a plant for managing and controlling power generation such as a hydraulic power, a thermal power, or a nuclear power, a plant for managing and controlling environmental power generation such as a solar power or a wind power, and a plant for managing and controlling vertical water, dams, or the like. As an example, the equipment 10 may be a three-stage water tank, a heat treatment furnace, or the like, which is one of process devices.

The equipment 10 is provided with the control target 20. In the present drawing, a case where only one control target 20 is provided in the equipment 10 is illustrated as an example, but the present invention is not limited thereto. The equipment 10 may be provided with a plurality of the control targets 20.

The equipment 10 may be provided with one or more sensors (not illustrated) for measuring various states (physical quantity) inside and outside the equipment 10. The sensor outputs state data indicating the measured state. Such state data may include, for example, operation data, consumption amount data, external environment data, and the like.

Here, the operation data indicates an operation state as a result of controlling the control target 20. The operation data includes a process variable PV (Process Variable) called a process value. As an example, when the equipment 10 is a three-stage water tank, the operation data may include data indicating the water level of the water tank. In addition, when the equipment 10 is a heat treatment furnace, the operation data may include data indicating the internal temperature (furnace temperature) of the furnace.

The operation data includes data indicating a manipulated variable (MV) given to the control target 20. As an example, when the equipment 10 is a three-stage water tank, the operation data may include data indicating the opening degree of a valve as the control target 20. In addition, when the equipment 10 is a heat treatment furnace, the operation data may include data indicating a current to a heating wire of a heater as the control target 20.

The consumption amount data indicates the consumption amount of at least one of an energy and a raw material in the equipment 10. For example, the consumption amount data may include the consumption amount of a power or a fuel, or the like.

The external environment data indicates a physical quantity which can act as a disturbance for the control of the control target 20. For example, the external environment data may include the temperature, the humidity, the sunshine, the wind direction, the wind volume, and the precipitation of the outside air of the equipment 10, various physical quantities which change with the control of another instrument provided in the equipment 10, or the like.

The control target 20 is an instrument, a device, and the like to be controlled. For example, the control target 20 may be an actuator, which controls at least one physical quantity of the amount, the temperature, the pressure, the flow rate, the speed, the pH, or the like of an object in the process of the equipment 10, such as a valve, a heater, a motor, a fan, or a switch and executes a required manipulation corresponding to the manipulated variable MV. As an example, when the equipment 10 is a three-stage water tank, the control target 20 may be a valve which controls the water level of the water tank. In addition, when the equipment 10 is a heat treatment furnace, the control target 20 may be a heater which controls a furnace temperature.

Such a control target 20 may be switchable, for example, between feedback (FB) control based on a manipulated variable MV (FB) given by an FB controller and artificial intelligence (Al) control based on a manipulated variable MV (Al) given by a machine learning model (also referred to as an AI model). In addition, such FB control may be, for example, control using at least one of proportional control (P control), integral control (I control), and differential control (D control), and may be PID control as an example.

The learning device 100 according to the present embodiment initializes the machine learning model to be used for the AI control of such a control target 20 by performing the preliminary learning before the start of the reinforcement learning of the machine learning model. That is, the learning device 100 according to the present embodiment initializes the machine learning model in order to start the reinforcement learning of the machine learning model from a state where prior knowledge is introduced by the preliminary learning instead of starting the reinforcement learning from a fresh state.

The learning device 100 may be a computer such as a personal computer (PC), a tablet computer, a smartphone, a workstation, a server computer, or a general-purpose computer, or may be a computer system in which a plurality of computers are connected. Such a computer system is also a computer in a broad sense. In addition, the learning device 100 may also be implemented by one or more virtual computer environments executable in a computer. Alternatively, the learning device 100 may be a dedicated computer designed for the preliminary learning of the machine learning model or may be dedicated hardware realized by a dedicated circuit. In addition, when the learning device 100 can be connected to the Internet, the learning device 100 may be realized by cloud computing.

The learning device 100 includes a data acquisition unit 110, an extraction unit 120, a preliminary learning unit 130, and a model storage unit 140. Note that these blocks are functional blocks which are functionally separated from each other, and may not necessarily coincide with an actual device configuration. That is, in the present drawing, even though the block is illustrated as one block, the block may not necessarily be configured by one device. In addition, in the present drawing, even if the blocks are illustrated as separate blocks, the blocks may not necessarily be configured by separate devices.

Before the control of the control target 20 provided in the equipment 10 by the machine learning model which outputs the action corresponding to the state of the equipment 10, the data acquisition unit 110 acquires initialization data including state data indicating the state of the equipment 10 and action data indicating the action on the control target 20. The data acquisition unit 110 supplies the acquired initialization data to the extraction unit 120.

The extraction unit 120 extracts sample data to be used for the initialization of the machine learning model from the initialization data. More specifically, the extraction unit 120 includes a selection unit 122 and a definition unit 124.

The selection unit 122 selects the initialization data acquired by the data acquisition unit 110. As a result, the extraction unit 120 extracts the sample data from the selected initialization data. The selection unit 122 supplies the selected initialization data to the definition unit 124.

The definition unit 124 defines options for the machine learning model to choose an action on the basis of the initialization data selected by the selection unit 122. As a result, the extraction unit 120 extracts, as the sample data, a combination of the state data included in the initialization data and the action included in the option. The extraction unit 120 supplies the extracted sample data to the preliminary learning unit 130.

Before the start of the reinforcement learning of the machine learning model, the preliminary learning unit 130 initializes the machine learning model by the preliminary learning on the basis of the initialization data. More specifically, the preliminary learning unit 130 performs the preliminary learning by using the sample data extracted by the extraction unit 120 from the initialization data acquired by the data acquisition unit 110, thereby initializing the machine learning model.

The model storage unit 140 stores the machine learning model. When the preliminary learning unit 130 performs the preliminary learning on the basis of the initialization data, the model storage unit 140 stores the initialized machine learning model initialized by the preliminary learning unit 130. In this manner, the learning device 100 initializes the machine learning model to be used for the AI control of the control target 20 by performing the preliminary learning before the start of the reinforcement learning of the machine learning model. This will be described in detail by exemplifying a case where the equipment 10 is a three-stage water tank.

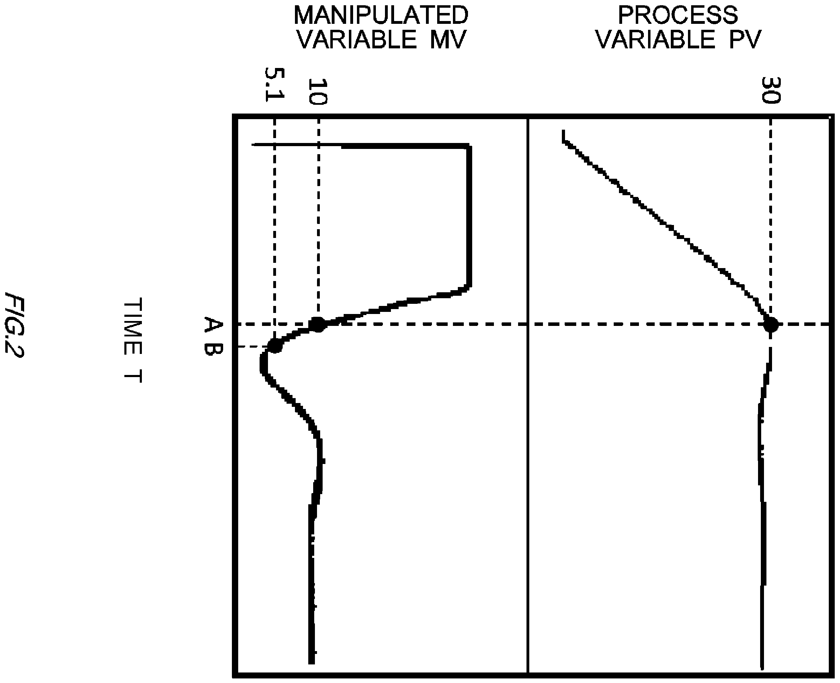

Fig. 2 illustrates an example of the process variable PV and the manipulated variable MV which may be acquired as the state data by the learning device 100 according to the present embodiment. In the present drawing, a horizontal axis represents the time T. In addition, on the upper side in the present drawing, a vertical axis represents the process variable PV. Here, the process variable PV indicates the water level of the water tank. In addition, on the lower side in the present drawing, the vertical axis represents the manipulated variable MV. Here, the manipulated variable MV indicates the valve opening degree.

In the present drawing, a state is illustrated in which the process variable PV = 30 and the manipulated variable MV = 10 at the time TA. Then, at the time TB following the time TA, the state is illustrated to change to the state of the manipulated variable MV = 5.1. The learning device 100 according to the present embodiment may acquire at least such process variable PV and manipulated variable MV as the state data.

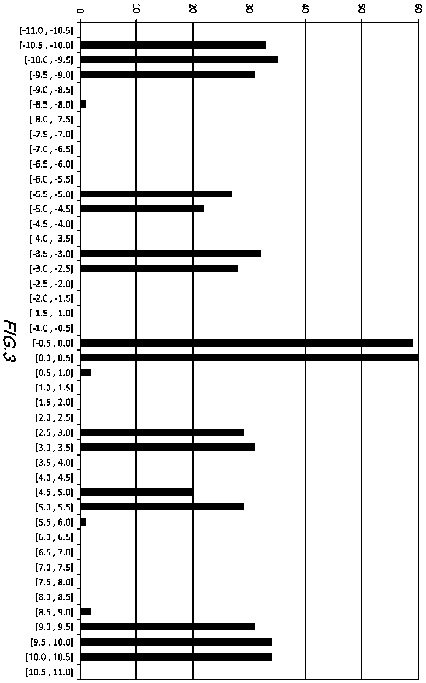

Fig. 3 illustrates an example of a distribution of a manipulated variable change amount ΔMV which may be acquired as the action data by the learning device 100 according to the present embodiment. In the present drawing, a horizontal axis represents the manipulated variable change amount ΔMV. Here, the manipulated variable change amount ΔMV indicates a change amount in the manipulated variable MV, that is, a value obtained by subtracting a current value from a next value in the manipulated variable MV. As an example, the manipulated variable change amount ΔMV at the time TA is 5.1 - 10 = -4.9. The learning device 100 according to the present invention acquires such a manipulated variable change amount ΔMV as the action data. In addition, in the present drawing, a vertical axis indicates the number of times the corresponding manipulated variable change amount ΔMV appears. In this manner, as illustrated in the present drawing, the manipulated variable change amount ΔMV may be distributed such that some groups of the manipulated variable change amounts ΔMV concentrated to some extent exist instead of arbitrary manipulated variable change amounts ΔMV being randomly distributed.

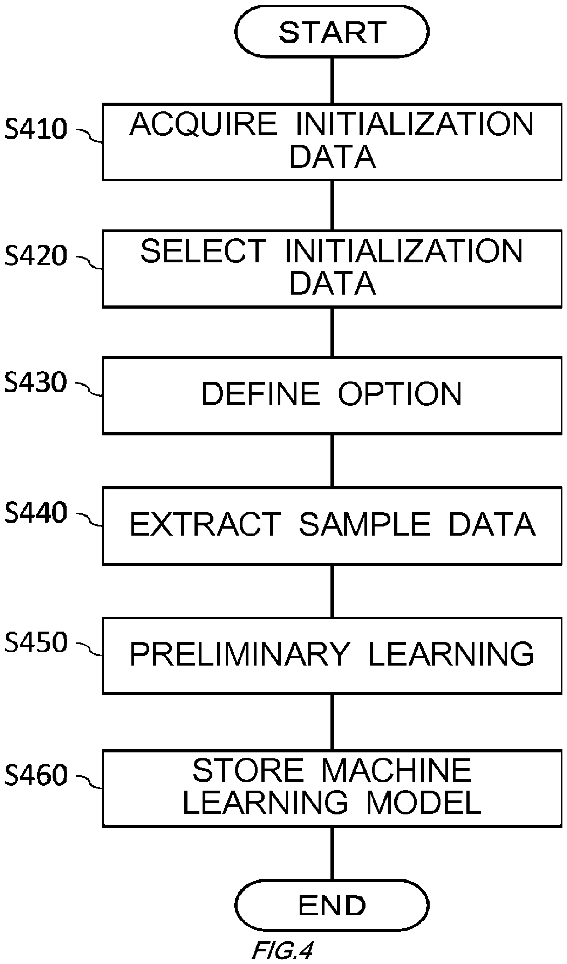

Fig. 4 illustrates an example of a flow of the preliminary learning by the learning device 100 according to the present embodiment.

In step S410, the learning device 100 acquires the initialization data. For example, before the control of the control target 20 provided in the equipment 10 by the machine learning model which outputs the action corresponding to the state of the equipment 10, the data acquisition unit 110 acquires the initialization data including the state data indicating the state of the equipment 10 and the action data indicating the action on the control target 20.

The data acquisition unit 110 acquires the initialization data before the control (Al control) of the control target 20 by the machine learning model. At this time, for example, the data acquisition unit 110 may acquire the initialization data from data obtained when the control target 20 is subjected to the FB control (for example, PID control), may acquire the initialization data from data obtained when the control target 20 is manually operated by an operator, or may acquire the initialization data from data obtained from a step response of the control target 20. Note that when there is no or insufficient actual data, the data acquisition unit 110 may acquire the initialization data from simulation data obtained by performing simulation on the basis of the physical model of the control target 20. At this time, the data acquisition unit 110 may acquire the initialization data such that various data in various situations due to a large number of initial conditions and disturbances is included as well as limited data to be stabilized from one initial state to a target value.

For example, the data acquisition unit 110 receives the state data measured by the sensor provided in the equipment 10 in time series from the equipment 10 via the network. However, the present invention is not limited thereto. The data acquisition unit 110 may acquire such state data by receiving the state data from another device different from the equipment 10, may acquire the state data via user input, or may acquire the state data by reading the state data from various memory devices.

As an example, the data acquisition unit 110 may acquire the state data including the process variable PV as the state 1 and the manipulated variable MV as the state 2 as illustrated in Fig. 2, for example. As a result, the data acquisition unit 110 acquires, for example, the state data indicating that state (state 1, state 2) = (30, 10) at the time TA.

The data acquisition unit 110 acquires data indicating the manipulated variable change amount ΔMV by subtracting the current value from the next value in the manipulated variable MV. As an example, the state is assumed to change to the state of the manipulated variable MV = 5.1 at the time TB following the time TA. In this case, the data acquisition unit 110 subtracts the manipulated variable MV = 10 at the time TA from the manipulated variable MV = 5.1 at the time TB to acquire the data indicating that the manipulated variable change amount ΔMV = -4.9 at the time TA. The data acquisition unit 110 may acquire such a manipulated variable change amount ΔMV as the action data. As a result, the data acquisition unit 110 acquires, for example, the action data indicating that the action is (-4.9) at the time TA.

That is, the data acquisition unit 110 may acquire each of the state (30, 10) as the state data and the action (-4.9) as the action data for the time TA. This means that in a state where the water level of the water tank is 30, and the valve opening degree is 10% at the time TA, the valve as the control target 20 is rotationally controlled by -4.9% (for example, 4.9% in a clockwise direction which is a direction in which the valve is closed).

The data acquisition unit 110 may acquire the initialization data in this manner, for example. Note that, in the above description, a case where the data acquisition unit 110 receives the state data via the network and performs calculation by itself using the received state data to acquire the action data has been described as an example. However, the present invention is not limited thereto. The data acquisition unit 110 may receive the action data in addition to the state data via the network. The data acquisition unit 110 supplies the acquired initialization data to the extraction unit 120.

In step S420, the learning device 100 selects the initialization data. For example, the selection unit 122 selects the initialization data acquired in step S410. That is, the selection unit 122 selects data to be used for the preliminary learning from the acquired initialization data. At this time, for example, the selection unit 122 may automatically calculate the width of an overshoot/undershoot or a hunting, an offset value, or the like as the evaluation value of a control performance, and select the initialization data such that each evaluation value is only data within a predetermined range. In addition, for example, the selection unit 122 may evaluate a similarity between the data on the basis of a kernel function and select the initialization data such that a large amount of data having a low similarity is included. The selection unit 122 supplies the selected initialization data to the definition unit 124.

In step S430, the learning device 100 defines options. For example, the definition unit 124 defines options for the machine learning model to choose an action on the basis of the initialization data selected in step S420. As an example, the definition unit 124 defines the options by analyzing the manipulated variable change amount ΔMV included in the initialization data selected in step S420. At this time, the definition unit 124 may classify the manipulated variable change amount ΔMV by an existing cluster analysis technique such as an x-means method, and define, as the option, the manipulated variable change amount ΔMV (for example, a median value, an average value, or the like of the manipulated variable change amount ΔMV belonging to the same class) as a representative of each class. As an example, it is assumed that the manipulated variable change amounts ΔMV included in the selected initialization data are distributed as illustrated in Fig. 3. In this case, the definition unit 124 may classify the manipulated variable change amounts ΔMV into seven classes, and define, as the options, a set of manipulated variable change amounts ΔMV including the representative values of the respective classes, here, manipulated variable change amounts ΔMV = -10, -5, -3, 0, 3, 5, and 10. In this manner, the definition unit 124 defines the options on the basis of the distribution of the actions indicated by the action data included in the initialization data.

In step S440, the learning device 100 extracts sample data. For example, the extraction unit 120 extracts the sample data from the initialization data selected in step S420. At this time, the extraction unit 120 does not use the actual data of the manipulated variable change amount ΔMV as it is, but replaces the actual data with a closest manipulated variable change amount ΔMV' among the options defined in step S430. Then, the extraction unit 120 extracts a combination of the state data at the same time point and the manipulated variable change amount ΔMV' replaced as sample data. As an example, when the action (-4.9) is acquired as the action data for the time TA, the extraction unit 120 replaces "-4.9" with the closest manipulated variable change amount ΔMV' among the options defined in step S430, here, "-5". Then, the extraction unit 120 extracts a combination of the state (30, 10) and the action (-5) as the sample data for the time TA. In this manner, the extraction unit 120 extracts, as the sample data, a combination of the state data included in the initialization data (more specifically, the initialization data selected in step S420) and the action included in the option. The extraction unit 120 supplies the extracted sample data to the preliminary learning unit 130.

In step S450, the learning device 100 performs the preliminary learning. For example, before the start of the reinforcement learning of the machine learning model, the preliminary learning unit 130 initializes the machine learning model by the preliminary learning on the basis of the initialization data. More specifically, the preliminary learning unit 130 performs the preliminary learning by using the sample data extracted in step S440 from the initialization data acquired in step S410, thereby initializing the machine learning model.

Here, the preliminary learning unit 130 stores, in the machine learning model, a policy for deciding an action for controlling the control target 20 according to the state of the equipment 10. As an example, the preliminary learning unit 130 stores a plurality of pieces of sample data extracted in step S440 in the table of the machine learning model. Such a table includes a combination of the state (state 1, state 2), that is, the process variable PV and the manipulated variable MV, and the action, that is, the manipulated variable change amount ΔMV', and a weight representing evaluation for the combination. The preliminary learning unit 130 stores each combination of the state and the action in the sample data extracted in step S440 in the table, and sets a weight for each combination to an initial value (for example, all values are 1).

Note that, in the above description, a case where the preliminary learning unit 130 temporarily sets the weight for each combination to a uniform value has been described as an example, but the present invention is not limited thereto. When an importance level is different for each combination, the preliminary learning unit 130 may set the weight for each combination to a value corresponding to the importance level.

In the above description, a case where the preliminary learning unit 130 stores, in the table, the state and the action in the sample data by using raw data has been described as an example, but the present invention is not limited thereto. The preliminary learning unit 130 may normalize and store at least one of the state and the action in the sample data in a predetermined range (for example, 0 to 1).

In this manner, the preliminary learning unit 130 initializes the machine learning model to choose an action closer to the action data corresponding to the state data in response to the input of the state data on the basis of the initialization data.

In step S460, the learning device 100 stores the machine learning model. For example, the model storage unit 140 stores the initialized machine learning model initialized by the preliminary learning in step 450.

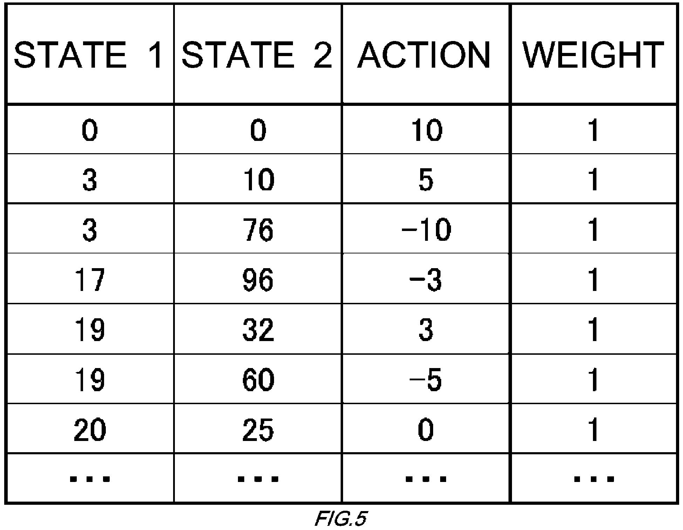

Fig. 5 illustrates an example of a table of the initialized machine learning model initialized by the preliminary learning by the learning device 100 according to the present embodiment. As described above, the state 1 indicates the process variable PV, and here indicates the water level of the water tank. In addition, the state 2 indicates the manipulated variable MV, and here, indicates the valve opening degree. In addition, the action indicates the manipulated variable change amount ΔMV'.

In the present drawing, for example, the first row stores the sample data which is obtained by rotating the valve by +10% (10% in a counterclockwise direction) from a state where the water level of the water tank is 0 and the valve opening degree is 0. Similarly, the second row stores the sample data which is obtained by rotating the valve by +5% from a state where the water level of the water tank is 3 and the valve opening degree is 10. Then, in this table, the weights are all set to 1, which is the initial value, for each combination of such a state and action.

Since the machine learning model decides an action by using the table initialized in this manner as the policy, the machine learning model outputs the action corresponding to the state of the equipment on the basis of each weight for the combinations of the state data included in the initialization data and the actions included in the options.

It should be noted that only one value of -10, -5, -3, 0, 3, 5, and 10 is stored as the action. That is, in the table of the machine learning model, only actions included in the options defined by the definition unit 124 are stored. As a result, the action output by the machine learning model is limited to any action included in the options, that is, any one of the manipulated variable change amounts ΔMV = -10, -5, -3, 0, 3, 5, and 10.

Conventionally, the PID control has been used in process control such as temperature adjustment, liquid level adjustment, and flow rate adjustment. In the PID control, stable control can be performed, but an overshoot or an undershoot may occur at the time of rising. In particular, when the overshoot occurs in the temperature adjustment control, the temperature of the target does not decrease, and a problem such as the delay of production start occurs. Here, it is possible to adjust a PID gain so as not to cause the overshoot or the like. However, in that case, a settling time until the response is stabilized is lengthened. Therefore, in order to improve the control performance, currently, it takes much time and effort to adjust each coefficient of the PID to an optimum value.

In this regard, the AI control using the machine learning model has also been proposed. In the AI control, when a machine learning model is generated by performing machine learning such that a phenomenon such as the overshoot is suppressed toward the target value of a certain control target to be stabilized more quickly to the vicinity of the target value, expected control can be performed. One of methods for generating such a machine learning model is reinforcement learning. In general, in a reinforcement learning algorithm, at the initial stage of learning, the machine learning model takes an action of randomly changing the manipulated variable, and the machine learning model is updated by repeating a large number of trials and errors. In this case, it is a current problem that it takes an enormous learning time to complete a model with an excellent control performance. In addition, when the reinforcement learning is applied to an N-order delay system such as temperature control having a long response time, the randomness of action choice at the initial stage of learning and the setting of an inappropriate action width cause a problem that convergence to the target value cannot be achieved even when the learning is repeatedly executed, or a model with an excellent control performance cannot be obtained.

In this regard, the learning device 100 according to the present embodiment initializes the machine learning model to be used for the AI control of the control target 20 by performing the preliminary learning before the start of the reinforcement learning of the machine learning model. That is, the learning device 100 according to the present embodiment initializes the machine learning model in order to start the reinforcement learning of the machine learning model from a state where prior knowledge is introduced by the preliminary learning instead of starting the reinforcement learning from a fresh state. As a result, according to the learning device 100 according to the present embodiment, the prior knowledge of control is introduced into the machine learning model, and thus it is possible to shorten the learning time in the subsequent reinforcement learning and improve the accuracy of the model. That is, at the initial stage of learning of the reinforcement learning to be executed afterwards, the machine learning model does not choose the action of randomly changing the manipulated variable, but chooses an action on the basis of the initialization including the know-how of the PID control, manual operation, or the like. Thus, it is possible to obtain a model that achieves more excellent control performance with a small number of times of learning.

The learning device 100 according to the present embodiment selects the initialization data and extracts the sample data used for the preliminary learning from the selected initialization data. As a result, the learning device 100 according to the present embodiment does not use all the acquired initialization data in the preliminary learning, but actively uses, for example, data when the control performance is excellent or data with a low similarity, and thus it is possible to further shorten the learning time and improve the accuracy of the model.

The learning device 100 according to the present embodiment defines an option for the machine learning model to choose an action, and extracts a combination of the state data included in the initialization data and the action included in the option as the sample data used for the preliminary learning. As a result, according to the learning device 100 according to the present embodiment, the action output by the machine learning model can be limited to any action included in the options, and thus it is possible to suppress an adverse effect due to the randomness of action choice in the initial learning of the reinforcement learning and the setting of an inappropriate action width.

At this time, the learning device 100 according to the present embodiment defines options on the basis of a distribution of actions indicated by the action data included in the initialization data. As a result, according to the learning device 100 according to the present embodiment, for example, the initialization can be performed such that the machine learning model outputs an action with a high frequency taken under the PID control or the manual operation.

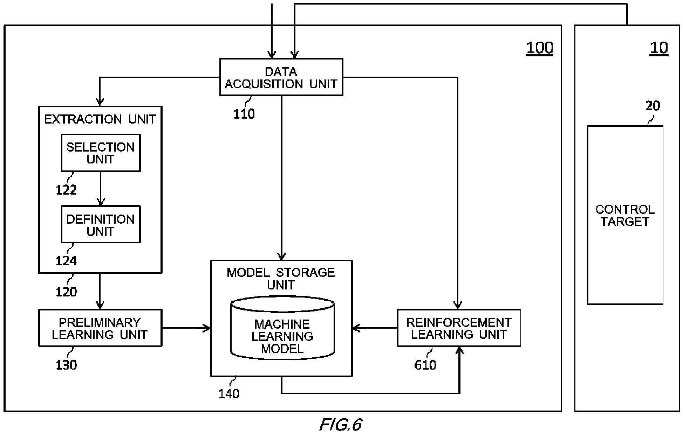

Fig. 6 illustrates an example of a block diagram of the learning device 100 according to a modification of the present embodiment. In Fig. 6, members having the same functions and configurations as those in Fig. 1 are denoted by the same reference numerals, and description thereof will be omitted except for following differences. The learning device 100 according to the present modification further has a function of updating the machine learning model by the reinforcement learning in addition to the function of initializing the machine learning model by the preliminary learning. The learning device 100 according to the present modification further includes a reinforcement learning unit 610 in addition to the functional units included in the learning device 100 according to the above-described embodiment.

In the present modification, the data acquisition unit 110 acquires the state data in response to the control of the control target 20 by the machine learning model. That is, the data acquisition unit 110 acquires the state data under the AI control using the initialized machine learning model or the updated machine learning model obtained by updating the initialized machine learning model. The data acquisition unit 110 supplies the acquired state data to the reinforcement learning unit 610. In addition, the data acquisition unit 110 inputs the acquired state data to the machine learning model stored in the model storage unit 140.

The reinforcement learning unit 610 performs the reinforcement learning by using, as the learning data, the state data and the action data acquired from the machine learning model in response to input of the state data to the machine learning model and updates the machine learning model. For example, in response to the input of the state data acquired by the data acquisition unit 110 to the machine learning model (the initialized machine learning model or the updated machine learning model obtained by updating the initialized machine learning model) stored in the model storage unit 140, the reinforcement learning unit 610 acquires, as the action data, the action output by the machine learning model.

Here, the machine learning model outputs the action corresponding to the state of the equipment 10 as follows, for example. The machine learning model performs kernel calculation with respect to each sample data stored in the table for a combination of the input state data and each action included in the option and calculates a distance to each sample data. Then, the machine learning model sequentially adds the result obtained by multiplying the distance calculated for each sample data by the corresponding weight and calculates an evaluation value for each combination. Then, the machine learning model outputs, as the next action, the action in the combination having the highest evaluation value. For example, the reinforcement learning unit 610 acquires, as the action data, the action output from the machine learning model in this manner. Then, the reinforcement learning unit 610 executes the reinforcement learning by using, as the learning data, the state data and the action data acquired in this manner under the AI control.

The reinforcement learning here may be similar to the conventional reinforcement learning except that the machine learning model is initialized. For example, the reinforcement learning unit 610 executes the reinforcement learning on the basis of each sample data in the learning data and a reward value for the sample data by a known algorithm such as kernel dynamic policy programming (KDPP). At this time, the reinforcement learning unit 610 evaluates the chosen action on the basis of the next state data of the manipulated control target 20 and calculates a reward value. In this case, as an example, the reinforcement learning unit 610 may set a reward function such that the reward value increases when the process variable PV approaches the target value. As a result, the reinforcement learning unit 610 overwrites the weight of each sample data in the initialized table and further adds new sample data which has not been stored so far to the table.

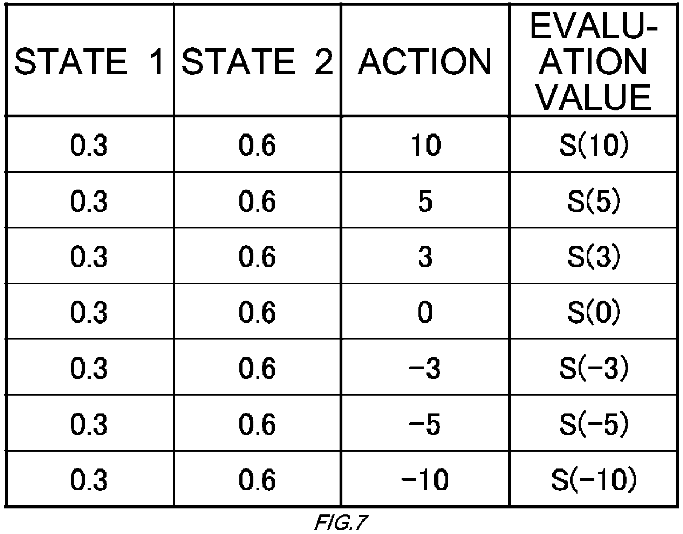

Fig. 7 illustrates an example of a calculation result when the learning device 100 according to the modification of the present embodiment outputs an action corresponding to a state by the machine learning model. In the present drawing, a case where the learning device 100 acquires the state (state 1, state 2) = (0.3, 0.6) as the state data under the AI control is illustrated as an example. In addition, in the present drawing, a case where a set of the manipulated variable change amounts ΔMV including the manipulated variable change amounts ΔMV = -10, -5, -3, 0, 3, 5, and 10 is defined as options is illustrated as an example. Therefore, in the present drawing, each row indicates a combination of the input state data and each action included in the options.

As an example, the first row means that the action (10) which is one of the options is chosen in the state (0.3, 0.6). Similarly, the second row means that the action (5) which is one of the options is chosen in the state (0.3, 0.6). The machine learning model calculates each evaluation value for such a combination of the state data and each action included in the options.

For example, the machine learning model performs kernel calculation with respect to each sample data stored in the table for the combination in the first row and calculates a distance to each sample data. Then, the machine learning model sequentially adds the result obtained by multiplying the distance calculated for each sample data by the corresponding weight and calculates the evaluation value S(10). The machine learning model repeatedly executes such calculation, and calculates the evaluation value S(5) when the action (5) is chosen, the evaluation value S(3) when the action (3) is chosen, the evaluation value S(0) when the action (0) is chosen, the evaluation value S(-3) when the action (-3) is chosen, the evaluation value S(-5) when the action (-5) is chosen, and the evaluation value S(-10) when the action (-10) is chosen. Then, the machine learning model outputs, as the next action, the action in the combination having the highest evaluation value. As an example, when the evaluation value S(-5) is the highest, the machine learning model outputs the action (-5) as the next action.

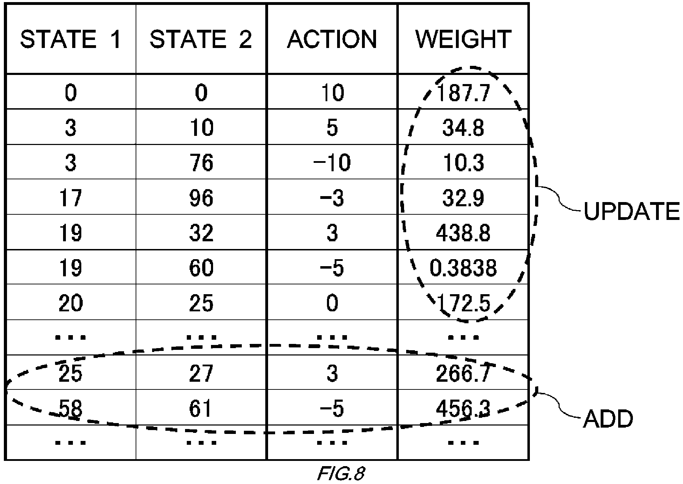

Fig. 8 illustrates an example of a table of a machine learning model obtained when the learning device 100 according to the modification of the present embodiment performs updating by reinforcement learning. As illustrated in the present drawing, the weight of each sample data initialized in the preliminary learning is updated from the initial value. In addition, as illustrated in the present drawing, new sample data which is not stored in the initial learning is added to the table. The reinforcement learning unit 610 evaluates the action output, for example, according to the evaluation result in Fig. 7 by the machine learning model on the basis of the next state data in the equipment 10 and calculates the reward value. Then, the reinforcement learning unit 610 updates the machine learning model to further increase the reward obtained by a series of actions. That is, the reinforcement learning unit 610 overwrites the weight of each sample data stored in the table in order to make it easier for the machine learning model to output an action for further increasing the reward. In addition, the reinforcement learning unit 610 can also add new sample data which has not been stored so far to the table. For example, in this manner, the reinforcement learning unit 610 updates the machine learning model to further increase the reward obtained by a series of actions.

In general reinforcement learning, the machine learning model chooses a random action at the initial stage of learning. However, in the learning device according to the present modification, the action based on the initialization including the know-how of the PID control, the manual operation, or the like is chosen, and thus it is possible to search for a control method capable of achieving a more excellent control performance with a small number of times of learning.

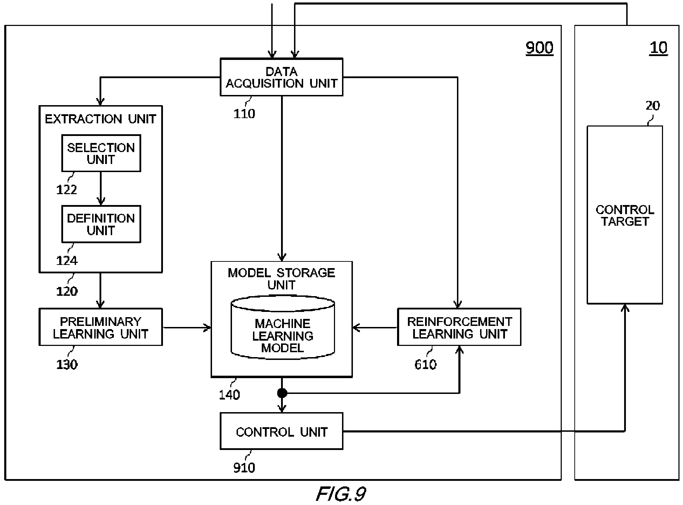

Fig. 9 illustrates an example of a block diagram of the control device 900 according to the present embodiment together with the equipment 10 provided with the control target 20. In Fig. 9, members having the same functions and configurations as those in Fig. 6 are denoted by the same reference numerals, and description thereof will be omitted except for following differences. The control device 900 according to the present embodiment further has a function of controlling the control target 20 by the machine learning model in addition to the function of the learning device 100 described above. The control device 900 further includes a control unit 910 in addition to the functional units included in the learning device 100 described above.

The control unit 910 controls the control target 20 by the machine learning model. For example, the control unit 910 gives the action output by the machine learning model to the control target 20 to control the control target 20. That is, the control unit 910 may function as a so-called AI controller. In this manner, the control device 900 according to the present embodiment may include the above-described learning device 100 and the control unit 910 which controls the control target by the machine learning model. Note that, at this time, the control unit 910 and other functional units may be integrally configured, or may be configured separately (for example, another functional unit is executed in a cloud).

Such a control device 900 may be combined with an existing FB controller, for example, a PID controller, and the control of the control target 20 may be switched according to a situation. That is, the control device 900 may further include an FB controller, and may control the control target 20 by switching between the FB control by the FB controller and the AI control by the machine learning model according to various situations (for example, the progress status of learning, the control accuracy, or the like).

Heretofore, the above-described embodiment has been described by exemplifying one possible aspect. However, the above-described embodiment may be modified or applied in various forms. For example, in the above description, a case where the definition unit 124 defines common options regardless of the state of the equipment has been described as an example. That is, a case where the definition unit 124 defines the set of the manipulated variable change amounts ΔMV including the manipulated variable change amounts ΔMV = -10, -5, -3, 0, 3, 5, and 10 as the only option regardless of the state of the equipment 10 has been described as an example. However, when the analysis is performed for each state of the equipment 10, a different result can be obtained in the distribution of the manipulated variable change amounts ΔMV. For example, in a state where the water tank is close to empty (the process variable PV is close to 0), it is conceivable that the number of times of appearance of the manipulated variable change amount ΔMV having a large absolute value and a sign of + increases. Conversely, in a state where the water level of the water tank is close to the target value, it is conceivable that the number of appearances of the manipulated variable change amount ΔMV having a small absolute value and a sign of + or - increases. In this manner, when the state of the equipment 10 can affect the number of occurrences of the manipulated variable change amount ΔMV, the definition unit 124 may define a plurality of options corresponding to the state of the equipment 10.

Various embodiments of the present invention may be described with reference to flowcharts and block diagrams, where the blocks may represent (1) a stage of a process in which an operation is performed or (2) a section of a device that is responsible for performing the operation. Specific steps and sections may be implemented by a dedicated circuit, a programmable circuit provided with a computer-readable instruction stored on a computer-readable medium, and/or a processor provided with the computer-readable instruction stored on the computer-readable medium. The dedicated circuit may include a digital and/or analog hardware circuit, and may include an integrated circuit (IC) and/or a discrete circuit. The programmable circuit may include a reconfigurable hardware circuit which includes memory elements such as logical AND, logical OR, logic XOR, logic NAND, logic NOR, and other logical operations, flip-flops, registers, field programmable gate arrays (FPGA), programmable logic arrays (PLA), and the like.

The computer-readable medium may include any tangible device capable of storing instructions for execution by a suitable device, so that the computer-readable medium having the instructions stored thereon includes a product including instructions that can be executed to create means for executing the operations designated in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray (registered trademark) disk, a memory stick, an integrated circuit card, and the like.

The computer-readable instruction may include any one of a source code or an object code written in any combination of one or more programming languages including assembler instructions, instruction-set-architecture (ISA) instructions, machine instructions, machine-dependent instructions, microcode, firmware instructions, state-setting data, an object oriented programming language such as Smalltalk (registered trademark), JAVA (registered trademark), and C++, and a conventional procedural programming language such as the "C" programming language or similar programming languages.

The computer-readable instruction may be provided for a processor of a general-purpose computer, a special purpose computer, or another programmable data processing apparatus, or a programmable circuit locally or via a local area network (LAN) or a wide area network (WAN) such as the Internet, and the computer-readable instruction may be executed to create means for executing the operations designated in the flowcharts or block diagrams. Examples of the processor include a computer processor, a processing unit, a microprocessor, a digital signal processor, a controller, a microcontroller, and the like.

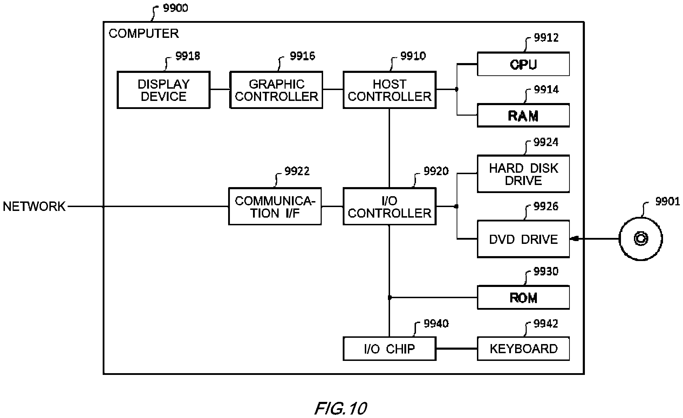

Fig. 10 illustrates an example of a computer 9900 in which a plurality of aspects of the present invention may be embodied in whole or in part. A program installed in the computer 9900 can cause the computer 9900 to function as an operation associated with the device according to the embodiment of the present invention or as one or more sections of the devices, or can cause the operation or the one or more sections to be executed, and/or can cause the computer 9900 to execute a process according to the embodiment of the present invention or a stage of the process. Such a program may be executed by a CPU 9912 to cause the computer 9900 to perform certain operations associated with some or all of the blocks in the flowcharts and block diagrams described in the present specification.

The computer 9900 according to the present embodiment includes the CPU 9912, a RAM 9914, a graphic controller 9916, and a display device 9918, which are interconnected by a host controller 9910. The computer 9900 also includes input/output units such as a communication interface 9922, a hard disk drive 9924, a DVD drive 9926, and an IC card drive, which are connected to the host controller 9910 via an input/output controller 9920. The computer also includes as a ROM 9930 and legacy input/output units such as a keyboard 9942, which are connected to input/output controller 9920 via an input/output chip 9940.

The CPU 9912 operates according to the programs stored in the ROM 9930 and the RAM 9914, thereby controlling each unit. The graphics controller 9916 acquires the image data generated by the CPU 9912 in a frame buffer or the like provided in the RAM 9914 or in itself and causes the image data to be displayed on the display device 9918.

The communication interface 9922 communicates with other electronic devices via a network. The hard disk drive 9924 stores programs and data used by the CPU 9912 in the computer 9900. The DVD drive 9926 reads programs or data from the DVD-ROM 9901 and provides the programs or data to the hard disk drive 9924 via the RAM 9914. The IC card drive reads programs and data from the IC card, and/or writes programs and data to the IC card.

The ROM 9930 stores therein a boot programs or the like executed by the computer 9900 at the time of activation and/or a program depending on the hardware of the computer 9900. The input/output chip 9940 may also connect various input/output units to the input/output controller 9920 via parallel ports, serial ports, keyboard ports, mouse ports, or the like.

The program is provided by a computer-readable medium such as the DVD-ROM 9901 or the IC card. The program is read from a computer-readable medium, installed in the hard disk drive 9924, the RAM 9914, or the ROM 9930 which are also examples of the computer-readable medium, and executed by the CPU 9912. The information processing described in these programs is read by the computer 9900 and provides cooperation between the programs and various types of hardware resources. The device or method may be configured by implementing operations or processing of information according to use of the computer 9900.

For example, when communication is performed between the computer 9900 and an external device, the CPU 9912 may execute a communication program loaded in the RAM 9914 and instruct the communication interface 9922 to perform communication processing on the basis of the processing described in the communication program. Under the control of the CPU 9912, the communication interface 9922 reads transmission data stored in a transmission buffer processing area provided in a recording medium such as the RAM 9914, the hard disk drive 9924, the DVD-ROM 9901, or the IC card, transmits the read transmission data to the network, or writes reception data received from the network in a reception buffer processing area or the like provided on the recording medium.

The CPU 9912 may cause the RAM 9914 to read all or a necessary portion of a file or a database stored in an external recording medium such as the hard disk drive 9924, the DVD drive 9926 (DVD-ROM 9901), or the IC card, and may execute various types of processing on data on the RAM 9914. Next, the CPU 9912 writes back the processed data to the external recording medium.

Various types of information such as various types of programs, data, tables, and databases may be stored in a recording medium and subjected to information processing. The CPU 9912 may execute various types of processing, which is described throughout the present disclosure and includes various types of operations designated by an instruction sequence of a program, information processing, condition determination, conditional branching, unconditional branching, information retrieval/replacement, and the like, on the data read from the RAM 9914 and writes back the results to the RAM 9914. In addition, the CPU 9912 may retrieve information in a file, a database, or the like in the recording medium. For example, when a plurality of entries each having the attribute value of a first attribute associated with the attribute value of a second attribute is stored in the recording medium, the CPU 9912 may retrieve an entry matching a condition in which the attribute value of the first attribute is designated from the plurality of entries, read the attribute value of the second attribute stored in the entry, and thus acquire the attribute value of the second attribute associated with the first attribute satisfying a predetermined condition.

The programs or software modules described above may be stored in a computer-readable medium on the computer 9900 or near the computer 9900. In addition, a recording medium such as a hard disk or a RAM provided in a server system connected to a dedicated communication network or the Internet can be used as the computer-readable medium, thereby providing a program to the computer 9900 via the network.

While the embodiments of the present invention have been described, the technical scope of the invention is not limited to the above-described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10 Equipment
20 Control target
100 Learning device
110 Data acquisition unit
120 Extraction unit
122 Selection unit
124 Definition unit
130 Preliminary learning unit
140 Model storage unit
610 Reinforcement learning unit
900 Control device
910 Control unit
9900 Computer
9901 DVD-ROM
9910 Host controller
9912 CPU
9914 RAM
9916 Graphic controller
9918 Display device
9920 Input/output controller
9922 Communication interface
9924 Hard disk drive
9926 DVD drive
9930 ROM
9940 Input/output chip
9942 Keyboard

## Claims

1. A control device (900) comprising:
a learning device (100) comprising:
a data acquisition (110) unit configured to acquire, before control of a control target provided in equipment by a machine learning model that outputs an action corresponding to a state of the equipment, initialization data including state data indicating the state of the equipment and action data indicating an action on the control target; wherein the state data include operation data indicating a process variable of the control target measured using sensors of the equipment and a manipulated variable used to control the control target, and the action data is the manipulated variable change amount; and
a preliminary learning unit (130) configured to initialize the machine learning model by performing preliminary learning on a basis of the initialization data before start of reinforcement learning of the machine learning model, wherein
the learning device (100) further comprises an extraction unit (120) configured to extract sample data to be used for initialization of the machine learning model from the initialization data,
wherein the extraction unit (120) includes a definition unit (124) configured to define an option for the machine learning model to choose the action,
the extraction unit (120) is configured to extract, as the sample data, a combination of the state data included in the initialization data and the action included in the option, and
the definition unit (124) is configured to define the option on a basis of a distribution of actions indicated by the action data included in the initialization data that is acquired from data obtained when the control target is subjected to a feedback control or a manual control, and
the control device (900) further comprises a control unit (910) configured to control the control target, which is an actuator controlling a physical quantity of the equipment corresponding to the manipulated variable change amount, by the machine learning model.

2. The control device (900) according to claim 1, wherein
the extraction unit (120) includes a selection unit (122) configured to select the initialization data, and
the extraction unit (120) is configured to extract the sample data from the selected initialization data.

3. The control device (900) according to claim 1, wherein
the machine learning model is configured to output the action corresponding to the state of the equipment on a basis of each weight for combinations of the state data included in the initialization data and actions included in the option.

4. The control device (900) according to claim 1 or 3, wherein
the definition unit (124) is configured to define a common option regardless of the state of the equipment.

5. The control device (900) according to claim 1 or 3, wherein
the definition unit (124) is configured to define a plurality of the options corresponding to the state of the equipment.

6. The control device (900) according to any one of claims 1 to 5, wherein
the data acquisition unit (110) is configured to acquire the state data in response to control of the control target by the machine learning model, the learning device (100) further comprising:
a reinforcement learning unit (610) configured to update the machine learning model by performing reinforcement learning using, as learning data, the state data and the action data acquired from the machine learning model in response to input of the state data to the machine learning model.

7. The control device (900) according to claim 6, wherein
the preliminary learning unit (130) is configured to initialize combinations of the action data and the state data based on the initialization data, in a table as a policy for deciding an action for controlling the control target, and
the reinforcement learning unit (610) is configured to update the table of the machine learning model to further increase a reward obtained by a series of actions.

8. The control device (900) according to claim 1, wherein in a table of the machine learning model, only the action included in the option defined by the definition unit (124) is stored.

9. A control method comprising:
acquiring, before control of a control target provided in equipment by a machine learning model that outputs an action corresponding to a state of the equipment, initialization data including state data indicating the state of the equipment and action data indicating an action on the control target; wherein the state data include operation data indicating a process variable of the control target measured using sensors of the equipment and a manipulated variable used to control the control target, and the action data is the manipulated variable change amount; and
initializing the machine learning model by performing preliminary learning on a basis of the initialization data before start of reinforcement learning of the machine learning model wherein
the learning method further comprises extracting sample data to be used for initialization of the machine learning model from the initialization data, wherein the extracting includes defining an option for the machine learning model to choose the action,
the extracting includes extracting, as the sample data, a combination of the state data included in the initialization data and the action included in the option, and
the defining includes defining the option on a basis of a distribution of actions indicated by the action data included in the initialization data that is acquired from data obtained when the control target is subjected to a feedback control or a manual control, and
the control method further comprises controlling the control target, which is an actuator controlling a physical quantity of the equipment corresponding to the manipulated variable change amount, by the machine learning model.

10. A control program that, when executed by a computer, causes the computer to function as:
a data acquisition unit (110) configured to acquire, before control of a control target provided in equipment by a machine learning model that outputs an action corresponding to a state of the equipment, initialization data including state data indicating the state of the equipment and action data indicating an action on the control target; wherein the state data include operation data indicating a process variable of the control target measured using sensors of the equipment and a manipulated variable used to control the control target, and the action data is the manipulated variable change amount; and
a preliminary learning unit (130) configured to initialize the machine learning model by performing preliminary learning on a basis of the initialization data before start of reinforcement learning of the machine learning model, wherein
the learning program further causes the computer to function as an extraction unit (120) configured to extract sample data to be used for initialization of the machine learning model from the initialization data, wherein the extraction unit (120) includes a definition unit (124) configured to define an option for the machine learning model to choose the action,
the extraction unit (120) is configured to extract, as the sample data, a combination of the state data included in the initialization data and the action included in the option, and
the definition unit (124) is configured to define the option on a basis of a distribution of actions indicated by the action data included in the initialization data that is acquired from data obtained when the control target is subjected to a feedback control or a manual control, and
the control program further causes the computer to function as a control unit (910) configured to control the control target, which is an actuator controlling a physical quantity of the equipment corresponding to the manipulated variable change amount, by the machine learning model.

11. A computer readable recording medium storing the program according to claim 10.

## Patentansprüche

1. Steuervorrichtung (900), die Folgendes umfasst:
eine Lernvorrichtung (100), die Folgendes umfasst:
eine Datenerfassungs-, (110), -einheit, die so konfiguriert ist, dass sie vor der Steuerung eines Steuerziels, das in einem Gerät durch ein maschinelles Lernmodell bereitgestellt wird, das eine Aktion ausgibt, die einem Zustand des Geräts entspricht, Initialisierungsdaten erfasst, die Zustandsdaten, die den Zustand des Geräts angeben, und Aktionsdaten, die eine Aktion auf das Steuerziel angeben, beinhalten; wobei die Zustandsdaten Betriebsdaten beinhalten, die eine Prozessvariable des Steuerziels, die unter Verwendung von Sensoren des Geräts gemessen wird, und eine manipulierte Variable, die zur Steuerung des Steuerziels verwendet wird, angeben, und die Aktionsdaten der Änderungsbetrag der manipulierten Variable sind; und
eine Vorlerneinheit (130), die so konfiguriert ist, dass sie das maschinelle Lernmodell initialisiert, indem sie vor Beginn des Verstärkungslernens des maschinellen Lernmodells Vorlernen auf der Grundlage der Initialisierungsdaten ausführt, wobei
die Lernvorrichtung (100) weiter eine Extraktionseinheit (120) umfasst, die so konfiguriert ist, dass sie aus den Initialisierungsdaten Beispieldaten extrahiert, die für die Initialisierung des maschinellen Lernmodells verwendet werden sollen,
wobei die Extraktionseinheit (120) eine Definitionseinheit (124) beinhaltet, die so konfiguriert ist, dass sie eine Option für das maschinelle Lernmodell definiert, um die Aktion zu wählen,
die Extraktionseinheit (120) so konfiguriert ist, dass sie als die Beispieldaten eine Kombination aus den in den Initialisierungsdaten beinhalteten Zustandsdaten und der in der Option beinhalteten Aktion extrahiert, und
die Definitionseinheit (124) so konfiguriert ist, dass sie die Option auf der Grundlage einer Verteilung von Aktionen definiert, die durch die in den Initialisierungsdaten beinhalteten Aktionsdaten angegeben werden, die aus Daten gewonnen werden, die erhalten werden, wenn das Steuerziel einer Feedback-Steuerung oder einer manuellen Steuerung unterliegt, und
die Steuervorrichtung (900) weiter eine Steuereinheit (910) umfasst, die so konfiguriert ist, dass sie das Steuerziel, bei dem es sich um einen Aktuator handelt, der eine physikalische Größe des Geräts entsprechend dem Änderungsbetrag der manipulierten Variable steuert, durch das maschinelle Lernmodell steuert.

2. Steuervorrichtung (900) nach Anspruch 1, wobei
die Extraktionseinheit (120) eine Auswahleinheit (122) beinhaltet, die so konfiguriert ist, dass sie die Initialisierungsdaten auswählt, und
die Extraktionseinheit (120) so konfiguriert ist, dass sie die Probendaten aus den ausgewählten Initialisierungsdaten extrahiert.

3. Steuervorrichtung (900) nach Anspruch 1, wobei
das maschinelle Lernmodell so konfiguriert ist, dass es die dem Zustand des Geräts entsprechende Aktion auf der Grundlage jeder Gewichtung für Kombinationen der in den Initialisierungsdaten beinhalteten Zustandsdaten und in der Option beinhalteten Aktionen ausgibt.

4. Steuervorrichtung (900) nach Anspruch 1 oder 3, wobei
die Definitionseinheit (124) so konfiguriert ist, dass sie unabhängig vom Zustand des Geräts eine gemeinsame Option definiert.

5. Steuervorrichtung (900) nach Anspruch 1 oder 3, wobei
die Definitionseinheit (124) so konfiguriert ist, dass sie eine Vielzahl von Optionen definiert, die dem Zustand des Geräts entsprechen.

6. Steuervorrichtung (900) nach einem der Ansprüche 1 bis 5, wobei
die Datenerfassungseinheit (110) so konfiguriert ist, dass sie die Zustandsdaten in Reaktion auf die Steuerung des Steuerungsziels durch das maschinelle Lernmodell erfasst, wobei die Lernvorrichtung (100) weiter Folgendes umfasst:
eine Verstärkungslerneinheit (610), die so konfiguriert ist, dass sie das maschinelle Lernmodell aktualisiert, indem sie Verstärkungslernen durchführt, wobei sie als Lerndaten die Zustandsdaten und die Aktionsdaten verwendet, die von dem maschinellen Lernmodell in Reaktion auf die Eingabe der Zustandsdaten in das maschinelle Lernmodell erfasst wurden.

7. Steuervorrichtung (900) nach Anspruch 6, wobei
die Vorlerneinheit (130) so konfiguriert ist, dass sie Kombinationen der Aktionsdaten und der Zustandsdaten auf der Grundlage der Initialisierungsdaten in einer Tabelle als eine Richtlinie zum Entscheiden einer Aktion zum Steuern des Steuerziels initialisiert, und
die Verstärkungslerneinheit (610) so konfiguriert ist, dass sie die Tabelle des maschinellen Lernmodells aktualisiert, um eine durch eine Reihe von Aktionen erzielte Belohnung weiter zu erhöhen.

8. Steuervorrichtung (900) nach Anspruch 1, wobei in einer Tabelle des maschinellen Lernmodells nur die Aktion gespeichert wird, die in der von der Definitionseinheit (124) definierten Option beinhaltet ist.

9. Steuerverfahren, das Folgendes umfasst:
Erfassen von Initialisierungsdaten, die Zustandsdaten, die den Zustand der Ausrüstung beinhalten, und Aktionsdaten, die eine Aktion auf das Steuerungsziel bereitstellen, umfassen, bevor ein Steuerziel, das in einem Gerät beinhaltet ist, durch ein maschinelles Lernmodell gesteuert wird, das eine Aktion ausgibt, die einem Zustand des Geräts entspricht; wobei die Zustandsdaten Betriebsdaten beinhalten, die eine Prozessvariable des Steuerziels, die unter Verwendung von Sensoren des Geräts gemessen wird, und eine manipulierte Variable, die zur Steuerung des Steuerziels verwendet wird, angeben, und die Aktionsdaten der Änderungsbetrag der manipulierten Variable sind; und
Initialisieren des maschinellen Lernmodells durch Ausführen eines Vorlernens auf der Grundlage der Initialisierungsdaten vor Beginn des Verstärkungslernens des maschinellen Lernmodells, wobei
das Lernverfahren weiter das Extrahieren von Beispieldaten, die für die Initialisierung des maschinellen Lernmodells verwendet werden sollen, aus den Initialisierungsdaten umfasst, wobei das Extrahieren das Definieren einer Option für das maschinelle Lernmodell beinhaltet, um die Aktion zu wählen,
das Extrahieren das Extrahieren einer Kombination der Zustandsdaten, die in den Initialisierungsdaten beinhaltet sind, und der Aktion, die in der Option vorgesehen ist, als die Beispieldaten beinhaltet, und
das Definieren das Definieren der Option auf der Basis einer Verteilung von Aktionen beinhaltet, die durch die in den Initialisierungsdaten beinhalteten Aktionsdaten angegeben werden, die aus Daten gewonnen werden, die erhalten werden, wenn das Steuerziel einer Feedback-Steuerung oder einer manuellen Steuerung unterliegt, und
das Steuerverfahren weiter das Steuern des Steuerziels umfasst, das ein Aktuator ist, der eine physikalische Größe des Geräts entsprechend dem Änderungsbetrag der manipulierten Variable steuert, durch das maschinelle Lernmodell.

10. Steuerprogramm, das, wenn es von einem Computer ausgeführt wird, den Computer dazu veranlasst, als Folgendes zu fungieren:
eine Datenerfassungseinheit (110), die so konfiguriert ist, dass sie vor der Steuerung eines Steuerziels, das in einem Gerät durch ein maschinelles Lernmodell bereitgestellt wird, das eine Aktion ausgibt, die einem Zustand des Geräts entspricht, Initialisierungsdaten erfasst, die Zustandsdaten, die den Zustand des Geräts angeben, und Aktionsdaten, die eine Aktion auf das Steuerziel angeben, beinhalten; wobei die Zustandsdaten Betriebsdaten beinhalten, die eine Prozessvariable des Steuerziels, die unter Verwendung von Sensoren des Geräts gemessen wird, und eine manipulierte Variable, die zur Steuerung des Steuerziels verwendet wird, angeben, und die Aktionsdaten der Änderungsbetrag der manipulierten Variable sind; und
eine Vorlerneinheit (130), die so konfiguriert ist, dass sie das maschinelle Lernmodell initialisiert, indem sie vor Beginn des Verstärkungslernens des maschinellen Lernmodells Vorlernen auf der Grundlage der Initialisierungsdaten ausführt, wobei
das Lernprogramm weiter den Computer veranlasst, als eine Extraktionseinheit (120) zu fungieren, die so konfiguriert ist, dass sie aus den Initialisierungsdaten Beispieldaten extrahiert, die für die Initialisierung des maschinellen Lernmodells verwendet werden sollen, wobei die Extraktionseinheit (120) eine Definitionseinheit (124) beinhaltet, die so konfiguriert ist, dass sie eine Option für das maschinelle Lernmodell definiert, um die Aktion zu wählen,
die Extraktionseinheit (120) so konfiguriert ist, dass sie als die Beispieldaten eine Kombination aus den in den Initialisierungsdaten beinhalteten Zustandsdaten und der in der Option beinhalteten Aktion extrahiert, und
die Definitionseinheit (124) so konfiguriert ist, dass sie die Option auf der Grundlage einer Verteilung von Aktionen definiert, die durch die in den Initialisierungsdaten beinhalteten Aktionsdaten angegeben werden, die aus Daten gewonnen werden, die erhalten werden, wenn das Steuerziel einer Feedback-Steuerung oder einer manuellen Steuerung unterliegt, und
das Steuerprogramm weiter den Computer veranlasst, als eine Steuereinheit (910) zu fungieren, die so konfiguriert ist, dass sie das Steuerziel, bei dem es sich um einen Aktuator handelt, der eine physikalische Größe des Geräts entsprechend dem Änderungsbetrag der manipulierten Variable steuert, durch das maschinelle Lernmodell steuert.

11. Computerlesbares Aufzeichnungsmedium, das das Programm nach Anspruch 10 speichert.

## Revendications

1. Dispositif de commande (900) comprenant :
un dispositif d'apprentissage (100) comprenant :
une unité d'acquisition de données (110) configurée pour acquérir, avant la commande d'une cible de commande fournie dans un équipement par un modèle d'apprentissage automatique qui délivre en sortie une action correspondant à un état de l'équipement, des données d'initialisation incluant des données d'état indiquant l'état de l'équipement et des données d'action indiquant une action sur la cible de commande ; dans lequel les données d'état incluent des données de fonctionnement indiquant une variable de traitement de la cible de commande mesurée à l'aide de capteurs de l'équipement et une variable manipulée utilisée pour commander la cible de commande, et les données d'action sont la quantité de changement de variable manipulée ; et
une unité d'apprentissage préliminaire (130) configurée pour initialiser le modèle d'apprentissage automatique en mettant en oeuvre un apprentissage préliminaire sur une base des données d'initialisation avant le début d'un apprentissage par renforcement du modèle d'apprentissage automatique, dans lequel
le dispositif d'apprentissage (100) comprend en outre une unité d'extraction (120) configurée pour extraire des données d'échantillon à utiliser pour initialisation du modèle d'apprentissage automatique à partir des données d'initialisation,
dans lequel l'unité d'extraction (120) inclut une unité de définition (124) configurée pour définir une option pour le modèle d'apprentissage automatique pour choisir l'action,
l'unité d'extraction (120) est configurée pour extraire, en tant que données d'échantillon, une combinaison des données d'état incluses dans les données d'initialisation et l'action incluse dans l'option, et
l'unité de définition (124) est configurée pour définir l'option sur une base d'une distribution d'actions indiquées par les données d'action incluses dans les données d'initialisation qui sont acquises à partir de données obtenues lorsque la cible de commande est soumise à une commande de rétroaction ou à une commande manuelle, et
le dispositif de commande (900) comprend en outre une unité de commande (910) configurée pour commander la cible de commande, qui est un actionneur commandant une quantité physique de l'équipement correspondant à la quantité de changement de variable manipulée, par le modèle d'apprentissage automatique.

2. Dispositif de commande (900) selon la revendication 1, dans lequel
l'unité d'extraction (120) inclut une unité de sélection (122) configurée pour sélectionner les données d'initialisation, et
l'unité d'extraction (120) est configurée pour extraire les données d'échantillon des données d'initialisation sélectionnées.

3. Dispositif de commande (900) selon la revendication 1, dans lequel
le modèle d'apprentissage automatique est configuré pour délivrer en sortie l'action correspondant à l'état de l'équipement sur une base de chaque poids pour des combinaisons des données d'état incluses dans les données d'initialisation et des actions incluses dans l'option.

4. Dispositif de commande (900) selon la revendication 1 ou la revendication 3, dans lequel
l'unité de définition (124) est configurée pour définir une option commune quel que soit l'état de l'équipement.

5. Dispositif de commande (900) selon la revendication 1 ou la revendication 3, dans lequel
l'unité de définition (124) est configurée pour définir une pluralité des options correspondant à l'état de l'équipement.

6. Dispositif de commande (900) selon l'une quelconque des revendications 1 à 5, dans lequel
l'unité d'acquisition de données (110) est configurée pour acquérir les données d'état en réponse à la commande de la cible de commande par le modèle d'apprentissage automatique, le dispositif d'apprentissage (100) comprenant en outre :
une unité d'apprentissage par renforcement (610) configurée pour mettre à jour le modèle d'apprentissage automatique en mettant en oeuvre un apprentissage par renforcement en utilisant, comme données d'apprentissage, les données d'état et les données d'action acquises à partir du modèle d'apprentissage automatique en réponse à l'entrée des données d'état dans le modèle d'apprentissage automatique.

7. Dispositif de commande (900) selon la revendication 6, dans lequel
l'unité d'apprentissage préliminaire (130) est configurée pour initialiser des combinaisons des données d'action et des données d'état sur la base des données d'initialisation, dans un tableau en tant que politique pour décider d'une action pour commander la cible de commande, et
l'unité d'apprentissage par renforcement (610) est configurée pour mettre à jour le tableau du modèle d'apprentissage automatique pour augmenter encore une récompense obtenue par une série d'actions.

8. Dispositif de commande (900) selon la revendication 1, dans lequel, dans un tableau du modèle d'apprentissage automatique, seule est stockée l'action incluse dans l'option définie par l'unité de définition (124).

9. Procédé de commande comprenant :
l'acquisition, avant la commande d'une cible de commande fournie dans un équipement par un modèle d'apprentissage automatique qui délivre en sortie une action correspondant à un état de l'équipement, de données d'initialisation incluant des données d'état indiquant l'état de l'équipement et des données d'action indiquant une action sur la cible de commande ; dans lequel les données d'état incluent des données de fonctionnement indiquant une variable de traitement de la cible de commande mesurée à l'aide de capteurs de l'équipement et une variable manipulée utilisée pour commander la cible de commande, et les données d'action sont la quantité de changement de variable manipulée ; et
l'initialisation du modèle d'apprentissage automatique en mettant en oeuvre un apprentissage préliminaire sur une base des données d'initialisation avant le début d'un apprentissage par renforcement du modèle d'apprentissage automatique, dans lequel
le procédé d'apprentissage comprend en outre l'extraction de données d'échantillon à utiliser pour initialisation du modèle d'apprentissage automatique à partir des données d'initialisation, dans lequel l'extraction inclut la définition d'une option pour le modèle d'apprentissage automatique pour choisir l'action,
l'extraction inclut l'extraction, en tant que données d'échantillon, d'une combinaison des données d'état incluses dans les données d'initialisation et l'action incluse dans l'option, et
la définition inclut la définition de l'option sur une base d'une distribution d'actions indiquées par les données d'action incluses dans les données d'initialisation qui sont acquises à partir de données obtenues lorsque la cible de commande est soumise à une commande de rétroaction ou à une commande manuelle, et
le procédé de commande comprend en outre la commande de la cible de commande, qui est un actionneur commandant une quantité physique de l'équipement correspondant à la quantité de changement de variable manipulée, par le modèle d'apprentissage automatique.

10. Programme de commande qui, lorsqu'il est mis en oeuvre par un ordinateur, amène l'ordinateur à fonctionner comme :
une unité d'acquisition de données (110) configurée pour acquérir, avant la commande d'une cible de commande fournie dans un équipement par un modèle d'apprentissage automatique qui délivre en sortie une action correspondant à un état de l'équipement, des données d'initialisation incluant des données d'état indiquant l'état de l'équipement et des données d'action indiquant une action sur la cible de commande ; dans lequel les données d'état incluent des données de fonctionnement indiquant une variable de traitement de la cible de commande mesurée à l'aide de capteurs de l'équipement et une variable manipulée utilisée pour commander la cible de commande, et les données d'action sont la quantité de changement de variable manipulée ; et
une unité d'apprentissage préliminaire (130) configurée pour initialiser le modèle d'apprentissage automatique en mettant en oeuvre un apprentissage préliminaire sur une base des données d'initialisation avant le début d'un apprentissage par renforcement du modèle d'apprentissage automatique, dans lequel
le programme d'apprentissage amène en outre l'ordinateur à fonctionner comme une unité d'extraction (120) configurée pour extraire des données d'échantillon à utiliser pour initialisation du modèle d'apprentissage automatique à partir des données d'initialisation, dans lequel l'unité d'extraction (120) inclut une unité de définition (124) configurée pour définir une option pour le modèle d'apprentissage automatique pour choisir l'action,
l'unité d'extraction (120) est configurée pour extraire, en tant que données d'échantillon, une combinaison des données d'état incluses dans les données d'initialisation et l'action incluse dans l'option, et
l'unité de définition (124) est configurée pour définir l'option sur une base d'une distribution d'actions indiquées par les données d'action incluses dans les données d'initialisation qui sont acquises à partir de données obtenues lorsque la cible de commande est soumise à une commande de rétroaction ou à une commande manuelle, et
le programme de commande amène en outre l'ordinateur à fonctionner comme une unité de commande (910) configurée pour commander la cible de commande, qui est un actionneur commandant une quantité physique de l'équipement correspondant à la quantité de changement de variable manipulée, par le modèle d'apprentissage automatique.

11. Support d'enregistrement lisible par ordinateur stockant le programme selon la revendication 10.
